# EUROPEAN PATENT APPLICATION

(11) **EP 4 471 702 A1**
(43) Date of publication of application: **04.12.2024**
(21) Application number: 23747000.0
(22) Date of filing: 25.01.2023
(51) Int. Cl.: G06Q 30/0645, G06Q 10/20, G06Q 50/08

(54) **WAREHOUSE ENTRY/EXIT MANAGEMENT SYSTEM**

(30) Priority: 28.01.2022 JP 2022011910
(71) Applicant: Hitachi Construction Machinery Co., Ltd., Tokyo 110-0015 (JP)
(72) Inventor: SATO, Jumpei, Tsuchiura-shi, Ibaraki 300-0013 (JP); YOSHIDA, Tomohiro, Tsuchiura-shi, Ibaraki 300-0013 (JP); SAWADA, Kazuhisa, Tsuchiura-shi, Ibaraki 300-0013 (JP); TAKEDA, Toshiya, Tsuchiura-shi, Ibaraki 300-0013 (JP); TSUKUI, Hiroshi, Tsuchiura-shi, Ibaraki 300-0013 (JP); OZASA, Yasufumi, Soka-shi, Saitama 340-0004 (JP)
(74) Representative: MERH-IP Matias Erny Reichl Hoffmann Patentanwälte PartG mbB
(86) International application number: PCT/JP2023/002334
(87) International publication number: WO 2023/145790

(57) **Abstract**

A warehouse entry/exit management system 1 is a system that inspects and manages a working machine 10 at warehouse entry/exit of the working machine 10. The warehouse entry/exit management system 1 includes a server device 20 that manages information of the working machine 10 and a terminal 30 that is communicatively connected to the server device 20. The server device 20 includes a storage section that stores inspection report information that records an inspection item and a maintenance item of the working machine 10. The server device 20 identifies the inspection report information based on a request from the terminal 30 and transmits the identified inspection report information. The server device 20 manages an inspection result transmitted from the terminal 30. The terminal 30 includes a display section 32 that displays the inspection report information and accepts an input of the inspection result and a photographing section 33 that takes a photograph of an inspection portion. When a previous inspection result regarding the working machine 10 is present in the storage section, the server device 20 also identifies the previous inspection result as the inspection report information.

## Description

### Technical Field

The present invention relates to a warehouse entry/exit management system that inspects and manages a working machine at warehouse entry/exit of the working machine.

### Background Art

In a rental industry of a working machine, such as a hydraulic excavator, ownership of the working machine is not transferred to a purchaser as in an ordinary sales contract and an aspect of the contract is "temporal lending and borrowing" with a fixed period, and therefore reliability is required for both a lender and a borrower. Especially, in a case where a state of the working machine when the working machine is lent to a customer (in other words, at warehouse exit of the working machine) differs from a state of the working machine returned from the customer (in other words, at warehouse entry of the working machine), in addition to equitability of a rental fee, whether the change is caused by the lender or the borrower, locus of responsibility, and the like become a problem.

Therefore, for example, Patent Literature I describes a system that takes photographs of a working machine when a working machine is lent to a customer and the working machine when the working machine is returned, store them to determine whether a damage has occurred in the working machine during the rental to appropriately manage the working machine.

### Citation List

### Patent Literature

Patent Literature 1: WO 2002/011007

### Summary of Invention

### Technical Problem

However, while the system described in Patent Literature 1 discloses a configuration to accumulate an enormous volume of the photograph data, how the presence/absence of damage in the working machine is confirmed is not specifically disclosed.

In consideration of the above-described circumstance, an object of the present invention is to provide a warehouse entry/exit management system that allows easily confirming presence/absence of damage in a working machine at warehouse entry/exit.

### Solution to Problem

A warehouse entry/exit management system according to the present invention inspects and manages a working machine at warehouse entry/exit of the working machine. The warehouse entry/exit management system comprises a server device and a terminal. The server device manages information of the working machine. The terminal is communicatively connected to the server device. The server device includes a storage section. The storage section stores inspection report information that records an inspection item and a maintenance item of the working machine. The server device identifies the inspection report information based on a request from the terminal and transmits the identified inspection report information to the terminal. The terminal includes a display section and a photographing section. The display section displays the inspection report information identified by the server device and accepts an input of an inspection result. The photographing section takes a photograph of an inspection portion. When a previous inspection result regarding the working machine is present in the storage section, the server device identifies the previous inspection result together with the inspection item and the maintenance item as the inspection report information.

In the warehouse entry/exit management system according to the present invention, when the previous inspection result regarding the working machine is present in the storage section, the server device identifies the previous inspection result together with the inspection item and the maintenance item as the inspection report information and transmits them to the terminal. Therefore, by referring to the previous inspection result, presence/absence of damage in the working machine at warehouse entry/exit can be easily confirmed.

### Advantageous Effects of Invention

The present invention allows easily determining the presence/absence of damage in the working machine at warehouse entry/exit.

### Brief Description of Drawings

Fig. 1 is a schematic configuration diagram illustrating a warehouse entry/exit management system according to an embodiment.
Fig. 2 is a function block diagram illustrating the warehouse entry/exit management system according to the embodiment.
Fig. 3 is a flowchart illustrating a control process of the warehouse entry/exit management system according to the embodiment.
Fig. 4 is a drawing illustrating an example of inspection items of an inspection report displayed in a report format on a display section of a terminal.
Fig. 5 is a drawing illustrating an example of maintenance items of the inspection report displayed on the display section of the terminal.
Fig. 6A is a drawing illustrating an example of an inspection input screen.
Fig. 6B is a drawing illustrating an example of a photo library.
Fig. 7 is a drawing illustrating an example of an output inspection completion report.
Fig. 8 is a drawing illustrating an example of an output inspection completion report.
Fig. 9 is a drawing illustrating an example of an output inspection completion report.

### Description of Embodiments

The following will describe embodiments of a warehouse entry/exit management system according to the present invention with reference to the drawings. The warehouse entry/exit management system according to the present invention is, for example, a system applied to rental service and sharing service of a working machine, such as a hydraulic excavator, that inspects and manages the working machine when the working machine is lent to a customer (at warehouse exit) and is returned (at warehouse entry). Here, the description will be given with an example of application of the warehouse entry/exit management system to the rental service of the working machine.

In the following description, an "inspection report" means a report generated by a terminal and to which an inspection result is not input, and an "inspection completion report" means a report to which the inspection results are input.

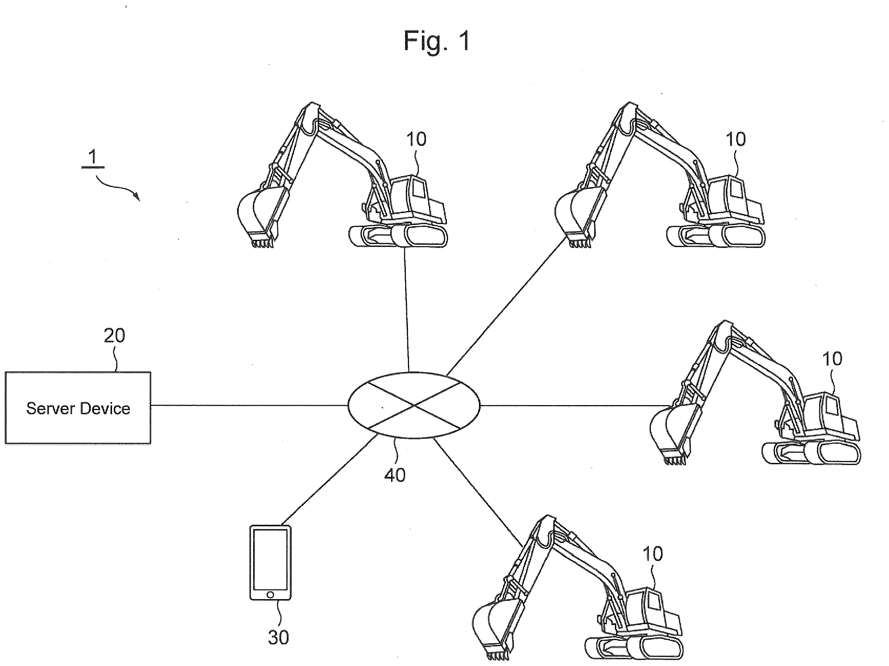

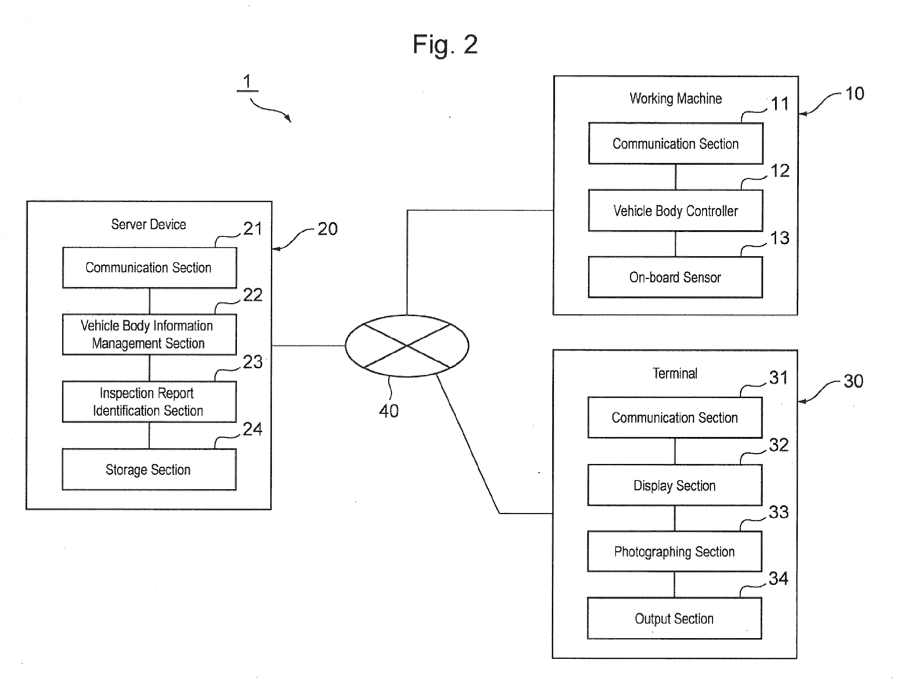

Fig. 1 is a schematic configuration diagram illustrating the warehouse entry/exit management system according to an embodiment. Fig. 2 is a function block diagram illustrating the warehouse entry/exit management system according to the embodiment. As illustrated in Fig. 1 and Fig. 2, a warehouse entry/exit management system 1 of this embodiment includes a plurality of working machines 10 as rental targets, a server device 20 that manages information of the plurality of working machines 10, and a terminal 30 used by an inspector who performs inspection work at warehouse entry/exit of the working machine 10. The working machine 10, the server device 20, and the terminal 30 are each communicatively configured over a network 40.

In this embodiment, the description will be given with an example of a hydraulic excavator as the working machine 10. However, the working machine 10 is not limited to the hydraulic excavator, and may be a crane truck, a wheel loader, a fork-lift truck, a bulldozer, or the like, or may be a combination of them.

As illustrated in Fig. 2, the working machine 10 includes a communication section 11, a vehicle body controller 12, and an on-board sensor 13. The communication section 11 is, for example, a radio for connection to the network 40 and regularly (for example, frequency of once a day) transmits operating information of the working machine 10 or the like including respective data detected by the on-board sensor 13 to the server device 20 in accordance with a command from the vehicle body controller 12. The operating information includes, for example, information, such as an operating location, the number of operating days, and an operating period of the working machine 10. Additionally, the communication section 11 transmits maintenance information of the working machine 10 to the server device 20. Note that when the operating information, the maintenance information, and the like of the working machine 10 are transmitted to the server device 20, individual identification information of the working machine 10 (for example, a vehicle body ID) is also transmitted together.

The vehicle body controller 12 is, for example, configured by a microcomputer formed in combination of a Central Processing Unit (CPU) that executes an operation, a Read Only Memory (ROM) as a secondary storage device that records programs for operation, and a Random Access Memory (RAM) as a temporary storage device that stores progress of the operation and temporal control variables, and controls the entire working machine 10 by execution of the stored program.

The on-board sensors 13 are various sensors mounted on the working machines 10 that detect respective data regarding the operations of the working machines 10 and output the detected respective data to the vehicle body controller 12. Examples of the on-board sensor 13 include a Global Positioning System (GPS) sensor that detects location information of the working machine 10, an Inertial Measurement Unit (IMU) that detects respective inclinations of an arm, a boom, and a bucket of the working machine 10, a turning angle sensor that detects a turning angle of an upperstructure of the working machine 10, and a traveling operation sensor that detects a traveling operation.

The server device 20 is, for example, installed in a head office, a branch office, a factory, or a management center of a manufacturer of the working machine 10, regularly collects information, such as the operating information transmitted from the working machine 10, and performs centralized management of the working machine 10. The server device 20 is, for example, configured by a microcomputer formed in combination of a Central Processing Unit (CPU) that executes an operation, a Read Only Memory (ROM) as a secondary storage device that stores programs for operation, and a Random Access Memory (RAM) as a temporary storage device that stores progress of the operation and temporal control variables and performs each process by execution of the stored program.

The server device 20 includes a communication section 21, a vehicle body information management section 22, an inspection report identification section 23, and a storage section 24. The communication section 21 is, for example, a radio for connection to the network 40. The vehicle body information management section 22 manages the information, such as the individual identification information (vehicle body ID), the operating information, and the maintenance information of the working machine transmitted from the working machine 10. The inspection report identification section 23 transmits inspection report information on the specific working machine 10 to the terminal 30 according to a request from the terminal 30. In the inspection report information, inspection items, maintenance items of the working machine 10, and the like are recorded.

The storage section 24 stores the operating information and the maintenance information of the working machine 10 and the like transmitted from the working machine 10 together with the individual identification information of the working machine 10. Additionally, the storage section 24 stores a format of the inspection report and the inspection result of the working machine 10 (namely, the inspection completion report) transmitted from the terminal 30. When the inspection result of the working machine 10 transmitted from the terminal 30 includes photograph data, the storage section 24 also stores the photograph data.

The terminal 30 is used to perform the inspection work of the working machine 10 by the inspector and is, for example, a Personal Computer (PC), a tablet terminal, a smartphone, and a mobile phone. Here, as the terminal 30, an example of the smartphone easily carried by the inspector will be described.

The terminal 30 has, for example, warehouse entry/exit inspection application software of the working machine 10 installed. When the inspection work of warehouse entry/exit is performed on the specific working machine 10, the inspector starts this application software and requests transmission of inspection report information on the specific working machine 10 to the server device 20. When the server device 20 transmits the inspection report information to the terminal 30, the terminal 30 displays the inspection report information in a report format. The inspector can perform the inspection work along with the items described in the inspection report displayed on the terminal 30 in the report format, takes photographs of an inspection portion, and attaches the taken photograph to the inspection report, or inputs the inspection results to the inspection report to create the inspection completion report. Further, the inspector can transmit the inspection completion report to the server device 20. Accordingly, the terminal 30 of this embodiment includes a communication section 31, a display section 32, a photographing section 33, and an output section 34.

The communication section 31 is, for example, a radio for connection to the network 40. The display section 32 is, for example, formed of a display and has a function of displaying content of the inspection report, a guidance screen regarding the inspection work, and each piece of information for the inspector. Additionally, the display section 32 has a function of accepting, for example, an input of the inspection result and an input of a search condition. For example, by pressing and selecting an icon and a button displayed on the display section 32 or by performing input via a keyboard displayed on the display section 32 the inspector, the inspection result or the like can be input. The photographing section 33 is, for example, formed of a camera built into the terminal 30. The output section 34 outputs the inspection completion report or the like.

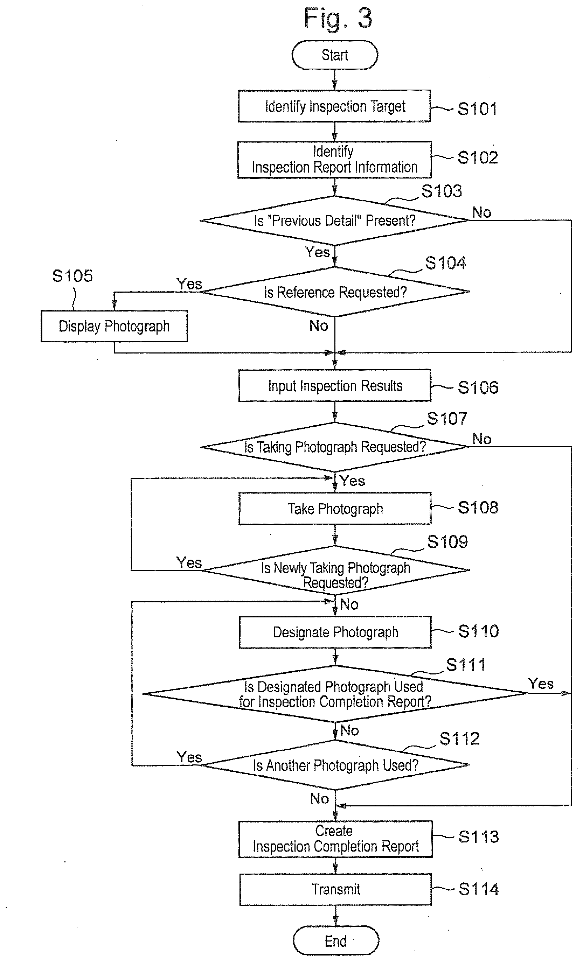

The following will describe a control process of the warehouse entry/exit management system 1 with reference to Fig. 3. Here, description will be given with an inspection process at warehouse entry (at return) of the working machine 10 as an example. However, since the inspection process at warehouse exit (at lending) of the working machine 10 is the same as the inspection process at warehouse entry, description of the inspection process at warehouse exit will be omitted.

In Step S101, the working machine 10 as an inspection target is identified. Methods of identifying the inspection target mainly include a method of identification by searching from the working machine 10 around the terminal 30, a method of identification by condition input to the terminal 30, and a method of identification by reading a QR code (registered trademark) stuck to the working machine 10 by the terminal 30. The following describes the respective methods in detail.

The method of identification by searching from the working machine 10 around the terminal 30 requires that the working machine 10 as the inspection target is communicatively configured with the terminal 30 and is present in a region communicable with the terminal 30. When a plurality of the working machines 10 are present around the terminal 30, the working machines 10 as the inspection target is automatically displayed on the display section 32 of the terminal 30 as an inspection target candidate (also referred to as an inspection target candidate list) together with the other working machines 10.

More specifically, when the working machine 10 enters a region communicable with the terminal 30, the communication section 11 can automatically communicate with the terminal 30 via the network 40, and therefore the working machine 10 can be automatically displayed on the display section 32 of the terminal 30 as the inspection target candidate. Then, the individual identification information (for example, the vehicle body ID) unique to each of the working machines 10 is displayed on the display section 32. The inspector selects the vehicle body ID displayed on the inspection target candidate list to identify the working machine 10 as the inspection target.

When the plurality of working machines 10 are present within the communicable region, the working machines 10 are displayed as the inspection target candidates on the display section 32 along an order that is close to a present location of the inspector who holds the terminal 30. Accordingly, the inspector can easily identify the working machine 10 as the inspection target and can grasp an approximate location of the working machine 10. The display can be conveniently set, for example, in an order of update date of the inspection report.

Note that the terminal 30 preferably has a function that allows gradually setting the communicable region around the terminal 30, and, for example, a communication area, such as 3 km, 5 km, and 10 km · · ·, in radius from the present location of the terminal 30 is selectable. This allows the inspector to further easily identify the working machine 10 as the inspection target from the plurality of inspection target candidates.

On the other hand, although the working machine 10 as the inspection target is communicatively configured with the terminal 30, when the working machine 10 is not present within the region communicable with the terminal 30 or when the working machine 10 is not communicatively configured with the terminal 30, the inspector reads the inspection target candidate list preliminarily stored in the terminal 30 and selects and identifies the working machine 10 as the inspection target from the read inspection target candidate list.

Note that the inspection target candidate list is not stored in the terminal 30 but may be stored in the server device 20 and may be acquired from the server device 20. In this case, the inspector transmits the location information of one's own terminal 30 to the server device 20, and the server device 20 creates models and the vehicle body IDs of the working machines 10 present within a predetermined range around the transmitted location information in the inspection target candidate list and transmits it to the terminal 30. Accordingly, the inspection target candidate list can be acquired from the server device 20.

In the method of identification by inputting conditions to the terminal 30, the inspector inputs a condition, such as a model name and the vehicle body ID, to the display section 32 of the terminal 30 and performs searching to identify the working machine 10 as the inspection target. At this time, to reduce input work of the inspector, the terminal 30 preferably has a suggestion function in which, for example, when a start number of the vehicle body ID is input, the candidates are narrowed down and are provided.

On the other hand, in the method by reading the QR code by the terminal 30, for example, when the working machine 10 as the inspection target is present around the inspector, by the inspector reading the QR code stuck to the working machine 10 with a code reader of the terminal 30, the working machine 10 as the inspection target is identified.

When the working machine 10 as the inspection target is identified in Step S101, the vehicle body ID of the identified working machine 10 is automatically transmitted to the server device 20.

In Step S102 following Step S101, inspection report information is identified. At this time, the inspection report identification section 23 of the server device 20 refers to the storage section 24 and identifies the inspection report information of the working machine 10 corresponding to the transmitted vehicle body ID. Although details will be described later, the inspection report information records inspection items and maintenance items of the working machine 10 and the like. Then, when the previous inspection result of the working machine 10 corresponding to the transmitted vehicle body ID (for example, the previous inspection completion report) is stored in the storage section 24, the previous inspection result is also identified as the inspection report information. In this embodiment, "identify" means selection of information for transmission to the terminal 30. When the previous inspection result includes image data showing the photograph of the inspection portion, the inspection report identification section 23 also identifies the photograph as the inspection report information. When the inspection report information is identified, the server device 20 transmits the identified inspection report information to the terminal 30.

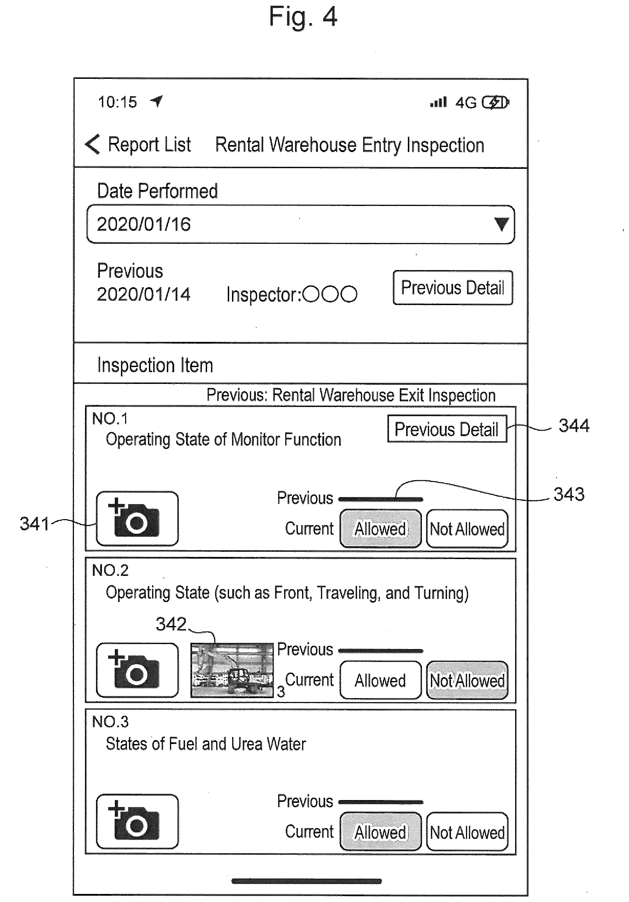

Then, the inspection report information transmitted to the terminal 30 is displayed on the display section 32 of the terminal 30. Fig. 4 is a drawing illustrating an example of the inspection items of the inspection report displayed in the report format on the display section of the terminal. As illustrated in Fig. 4, the inspection report, for example, lists the inspection items, such as "Operating State of Monitor Function," "Operating State (such as Front, Traveling, and Turning)," and "States of Fuel and Urea Water." The inspection report displays an icon 341 of a camera for each inspection item. Pressing the icon 341 causes it to enter a mode in which the photographing section 33 is allowed to start to take photographs.

The inspection report displays buttons "Allowed" or "Not Allowed" indicating the inspection result for each inspection item. "Allowed" indicates the inspection result without a problem and "Not Allowed" indicates that some sort of countermeasure is required or some sort of countermeasure was performed. After the inspector performs each inspection work following the inspection item described in the inspection report, the inspector only needs to select the button of "Allowed" or "Not Allowed" as the input of the inspection result. It is set that when any of "Allowed" and "Not Allowed" is selected, a color of the selected button changes. For example, when any of "Allowed" and "Not Allowed" is selected, the color of the selected button turns to red. Accordingly, an effect of avoiding an erroneous input of the inspection result is provided.

Additionally, as illustrated in Fig. 4, each inspection item displays a bar 343 indicating the previous inspection result. For example, in the inspection item of "Operating State of Monitor Function," the bar 343 is displayed above "Allowed," but the bar 343 is not displayed above "Not Allowed." This indicates that the previous inspection result of "Operating State of Monitor Function" was "Allowed (without a problem)." On the other hand, "Not Allowed" indicates that there was some sort of problem. Note that the bar 343 is preferably displayed in red. This allows the inspector to easily grasp the previous inspection result.

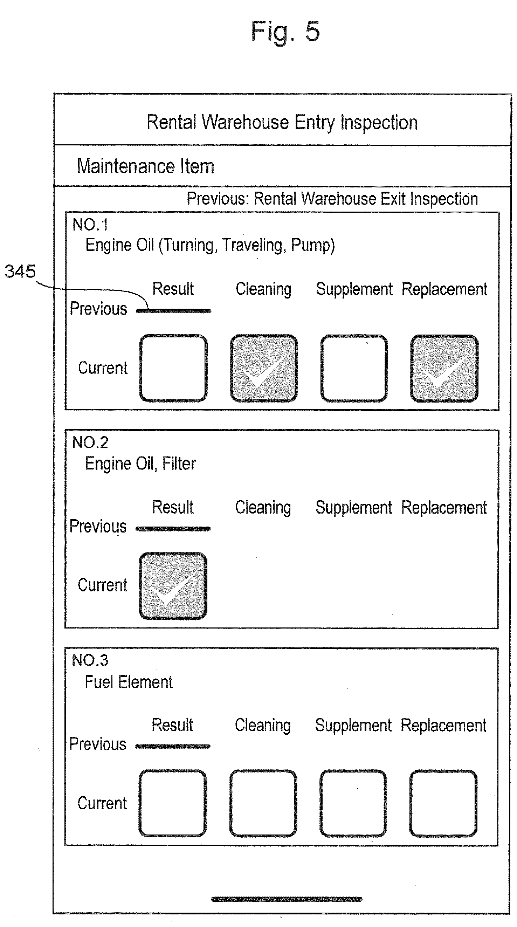

Fig. 5 is a drawing illustrating an example of the maintenance items of the inspection report displayed on the display section of the terminal. As illustrated in Fig. 5, the inspection report lists the maintenance items, such as "Engine Oil (Turning, Traveling, Pump)," "Engine Oil, Filter," and "Fuel Element." The maintenance item indicates the details of the inspection result and, for example, is described after the description position of the inspection item in the inspection report. Buttons of "Result," "Cleaning," "Replenish," and "Replacement" are displayed for each of the maintenance items. "Result" indicates that the inspection result is without a problem, and "Cleaning," "Replenish," and "Replacement" indicate that cleaning work, Replenish work, and replacement work were performed, respectively. Here, there is a mechanism that when any of "Cleaning," "Replenish," and "Replacement" is selected, "Result" cannot be selected, and there is a mechanism that when "Result" is similarly selected, "Cleaning," "Replenish," or "Replacement" cannot be selected. In the maintenance item, a bar 345 indicating the previous inspection result is displayed similarly to the inspection item.

In Step S103 following Step S102, whether "Previous Detail" is present in the inspection report displayed on the display section 32 is determined. Specifically, for example, at the right side of the inspection item of "Operating State of Monitor Function" illustrated in Fig. 4, a button 344 of "Previous Detail" is displayed. "Previous Detail" indicates that there is the photograph data at the previous inspection. For example, when the photograph data indicating "Operating State of Monitor Function" is attached to the previous inspection completion report, the button 344 of "Previous Detail" is displayed on the inspection item of the "Operating State of Monitor Function." On the other hand, the button 344 of "Previous Detail" is not displayed on the inspection item of "Operating State (such as Front, Traveling, and Turning" or "States of Fuel and Urea Water." This means that the photograph data indicating the inspection items are not attached to the previous inspection completion report.

When it is determined that "Previous Detail" is absent in all of the inspection items in Step S103 (No), the control process proceeds to Step S106. On the other hand, when "Previous Detail" is present in at least one of the inspection items (Yes), "Previous Detail" is determined to be present and the control process proceeds to Step S104.

In Step S104, whether reference of "Previous Detail" is requested is determined. When the inspector requests to refer to "Previous Detail" and presses the button 344 of "Previous Detail," the photograph at the previous inspection is displayed (Step S105). That is, "Previous Detail" is a link to the information on the previous inspection result, and pressing the button switches to a screen that displays the photograph taken at the previous inspection. This allows referring to the previous inspection result, and the content attempted to be inspected can be easily compared with the previous inspection result.

On the other hand, when the inspector does not request the reference of "Previous Detail," for example, when a button "Not Requested" (not illustrated) is pressed or a state in which nothing is performed has elapsed for a predetermined period (for example, 10 seconds), it is determined that the reference is not requested, and the control process proceeds to Step S106.

In Step S106, the inspector inputs the inspection results to the inspection items and the maintenance items displayed on the display section 32. At this time, the inspector selects the above-described button of "Allowed" or "Not Allowed" or selects any of "Result," "Cleaning," "Replenish," and "Replacement" to input the inspection result.

In Step S107 following Step S106, whether to request taking a photograph is determined. At this time, when the inspector requests to taking a photograph (Yes), the icon 341 of the camera illustrated in Fig. 4 is pressed. When the icon 341 of the camera is pressed, the control process proceeds to Step S108, and the inspector can take a photograph of the inspection portion using the photographing section 33.

When the photograph is taken, a thumbnail image 342 is displayed adjacent to the icon 341 of the camera. As illustrated in Fig. 4, in the inspection item of "Operating State (such as Front, Traveling, and Turning," one thumbnail image 342 is displayed, and further a number (here, 3) is displayed at the lower right of the thumbnail image 342. This number indicates the number of selected photographs. For example, when three photographs are selected for the inspection item by the inspector, the first photograph is displayed as the thumbnail image 342, and the number indicating that the total number of the selected photographs is three is also displayed at the lower right of the thumbnail image 342. This allows easily grasping that how many photographs is selected as the photograph data regarding the inspection.

On the other hand, when taking a photograph is not requested in Step S107 (No), for example, when the inspector presses a button "Not Requested to Take Photograph" (not illustrated) or a state in which nothing is performed has elapsed for a predetermined period (for example, 10 seconds), it is determined that the taking a photograph is not requested, and the control process proceeds to Step S113.

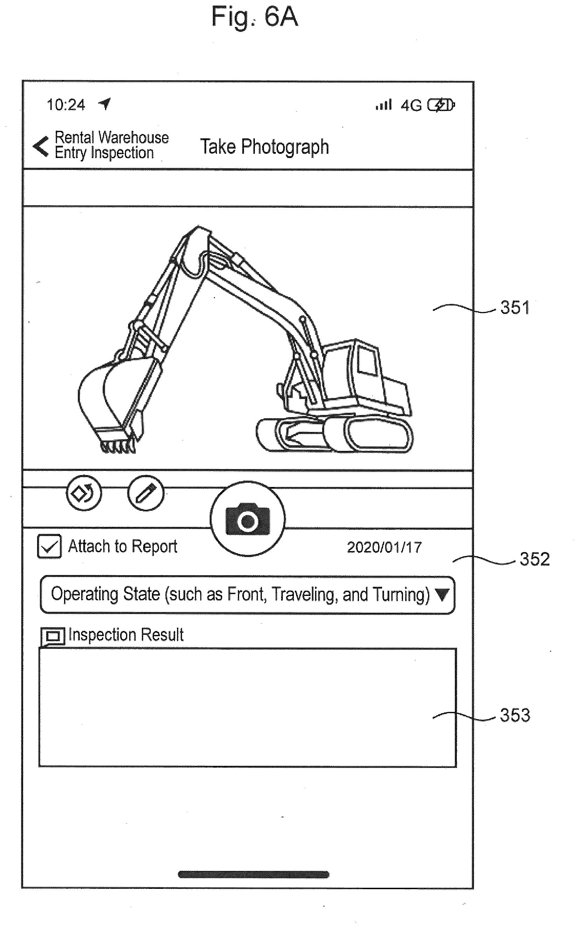

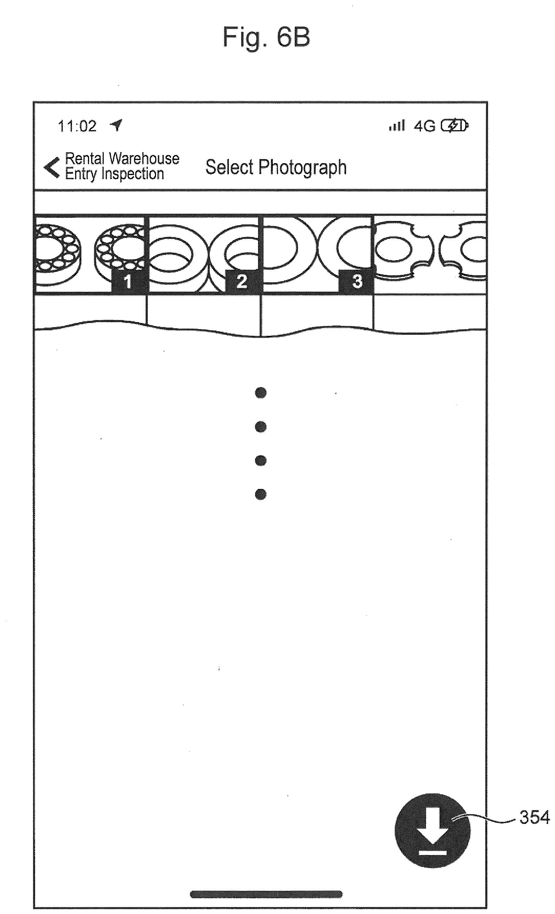

Here, based on Fig. 6A and Fig. 6B, an example of an inspection input screen and a photo library will be described. Fig. 6A illustrates the inspection input screen displayed on the display section 32. As illustrated in Fig. 6A, the inspection input screen displayed on the display section 32 includes a photograph display region 351, a photograph instruction acceptance region 352, and a comment acceptance region 353. The photograph display region 351 corresponds to a "first display region" described in the claims and is a region displaying the photograph of the inspection portion. The photograph display region 351 is linked to the photo library (see Fig. 6B) in the terminal 30. As illustrated in Fig. 6B, the photo library stores the photograph of the inspection portion taken by the photographing section 33. Here, there is a mechanism that when the photograph stored in the photo library is selected, the selected photograph can be displayed in the photograph display region 351.

The photograph instruction acceptance region 352 is a region that accepts a photograph instruction. When the photograph instruction is accepted via the photograph instruction acceptance region 352, the photograph displayed in the photograph display region 351 at the time point is determined as the photograph data attached to the inspection completion report. Note that the "report" described in Fig. 6A is the inspection completion report.

The comment acceptance region 353 corresponds to a "second display region" described in the claims and accepts an input of a comment by the inspector as related information of the inspection result. The comment may be, for example, selected from comment types prepared in advance, or the inspector may directly input. The comment input is performed using a text input function provided with the terminal 30. The comment type is, for example, stored in the terminal 30 in advance. Additionally, the comment input may be combination of the selection from the comment types and direct input.

In Step S109 following Step S108, whether taking a new photograph is requested is determined. At this time, for example, when taking a photograph is further required (Yes), the inspector presses a button of "Request to Newly Take Photograph." Accordingly, the control process returns to Step S108 and taking a photograph is repeated. That is, the taken photograph may be plural, and the taken photograph is stored in the above-described photo library.

On the other hand, when newly taking a photograph is not requested in Step S109 (No), for example, when the inspector presses a button of "Not Request to Newly Take Photograph" (not illustrated) or a state in which nothing is performed has elapsed for a predetermined period (for example, 10 seconds), it is determined that newly taking a photograph is not requested, and the control process proceeds to Step S110.

In Step S110, the photograph is designated (also referred to as selection of the photograph). At this time, the inspector selects a photograph to be attached to the inspection completion report from the above-described photo library to allow designating the photograph data regarding each inspection item. Then, when a plurality of photograph data are desired to be attached, the photographs only need to be continuously selected. A peripheral of the designated photograph is surrounded by a frame so as to allow distinction from the other undesignated photographs. Among the selected photographs here, the first photograph is displayed as the thumbnail image 342 illustrated in Fig. 4 and the number of selected photographs can be grasped from the number at the lower right of the thumbnail image 342. To cancel the designation, when the designated photograph is designated again, the frame surrounding the photograph disappears and it is indicated that the designation is not designated.

In Step S111 following Step S110, whether the photograph designated in Step S110 is used for the inspection completion report is determined. At this time, as illustrated in Fig. 6B, at the lower right of the region displaying the photo library, an arrow icon 354 is displayed. When the icon 354 is pressed, the selected photograph is determined. When the inspector uses the photograph designated in Step S110 for the inspection completion report, the icon 354 is selected, and thus, the control process proceeds to Step S113. On the other hand, when the inspector does not use the photograph designated in Step S110, the designation is cancelled by the above-described procedure or the screen returns to the previous screen without pressing the icon 354, and thus the control process proceeds to Step S112.

In Step S112, whether another photograph is used is determined. At this time, for example, buttons of "Use Another Photograph" and "Not Use Another Photograph" (not illustrated) are displayed on the display section 32. When the inspector selects "Use Another Photograph," the control process returns to Step S110. On the other hand, when the inspector selects "Not Use Another Photograph," the control process proceeds to Step S113.

In Step S113, the inspection completion report is created. At this time, the terminal 30 uses the inspection result input in Step S106 and the photograph designated in Step S110 to create the inspection completion report. When "Not Request to Take Photograph" is determined in the above-described Step S107, the terminal 30 uses the inspection result input in Step S106 to create the inspection completion report without attachment of the photograph.

In Step S114 following Step S113, the terminal 30 transmits the inspection completion report created in Step S113 to the server device 20. At the time, when the photograph data is attached to the inspection completion report, the data of the attached photograph is also transmitted. When the server device 20 receives the transmitted inspection completion report, the server device 20 causes the storage section 24 to store them as inspection report information.

When Step S 114 is completed, a sequence of the control process ends.

In the warehouse entry/exit management system 1 according to this embodiment, when the previous inspection result regarding the working machine 10 is present, the inspection report identification section 23 of the server device 20 identifies the previous inspection result together with the inspection items and the maintenance items as the inspection report information and transmits them to the terminal 30. Therefore, when the inspector refers to the previous inspection result, the presence/absence of damage in the working machine 10 at warehouse entry/exit can be easily confirmed. Especially, when the photograph of the previous inspection portion is included in the previous inspection result, the previous photograph and the current photograph are compared to allow easily confirming the presence/absence of damage in the working machine 10.

The inspection completion report may be displayed on the display section 32 of the terminal 30 and further may be output as a paper by the output section 34. The output by a paper is preferably printed by arranging the previous inspection result and the current inspection result side by side (in other words, in the form of parallelly written). Then, the photograph regarding the previous inspection result and the photograph regarding the current inspection result are more preferably laterally arranged side by side for each inspection item and printed. Accordingly, the change in the working machine 10 at warehouse entry/exit can be easily confirmed visually.

The inspection completion report preferably differs in format of output between a lender (for example, a rental trader) and a borrower (for example, a customer) of the working machine 10. This is because the information that the lender and the borrower obtain from the inspection completion report differs. That is, the lender needs to grasp details of the working machine 10 as the rental target. This is because when a component needs to be replaced by rental and an expense claim for the replacement of the component is generated, the borrower desires to grasp each of the state of the component before lending and the state at return as grounds of the claim.

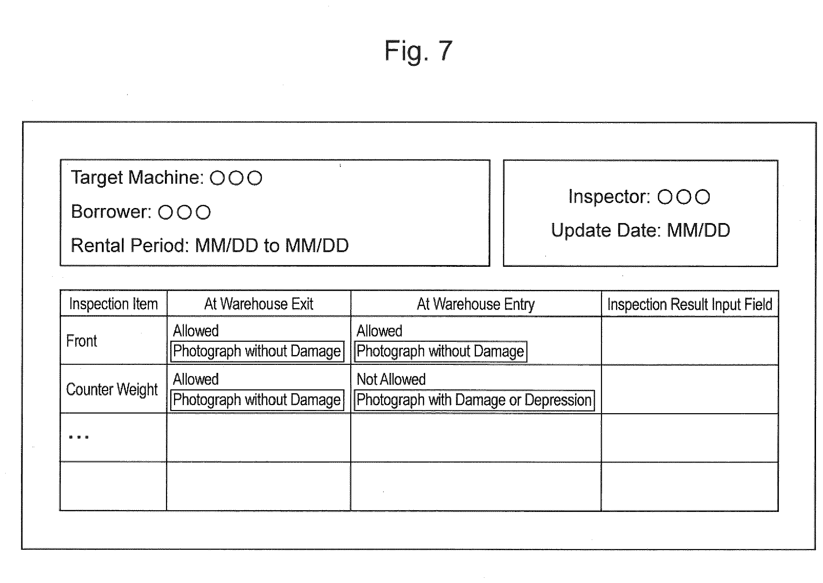

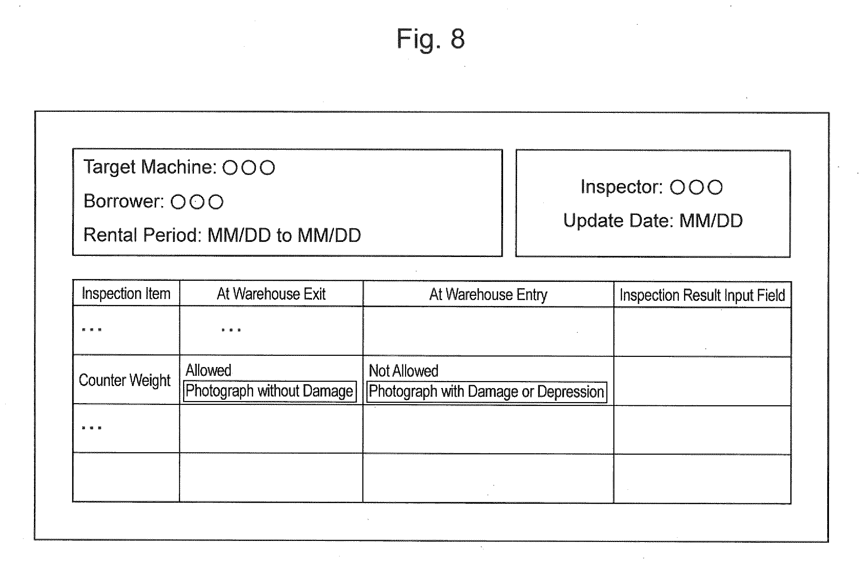

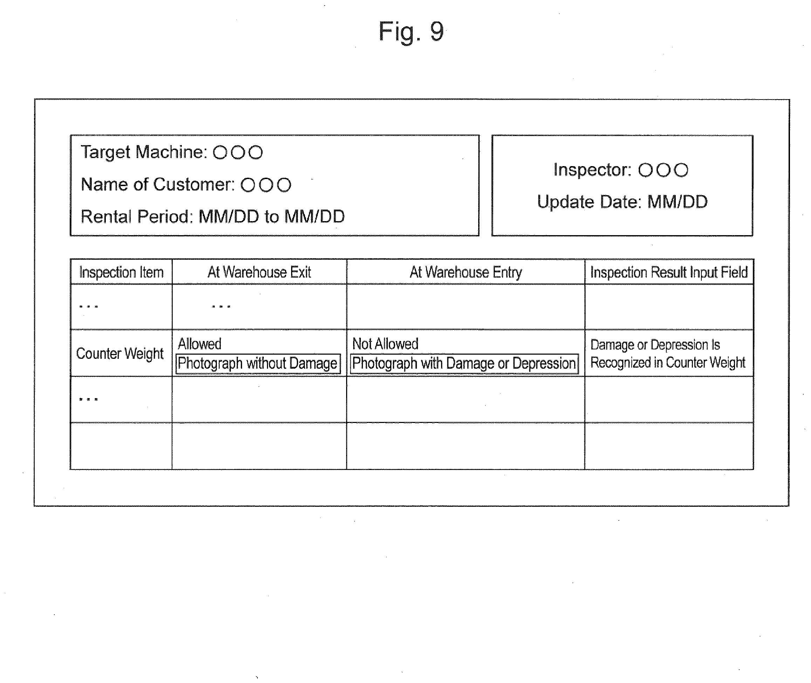

The following will describe the output inspection completion report with reference to Fig. 7 to Fig. 9. Fig. 7 and Fig. 8 are the inspection completion reports output for the lender, and Fig. 9 is the inspection completion report output for the borrower. Fig. 7 to Fig. 9 omit the photograph of the inspection portion and instead illustrate a "Photograph without Damage" or a "Photograph with Damage or Dent."

The inspection completion report illustrated in Fig. 7 is an output of the inspection results at warehouse entry/exit of all inspection items. In this case, the lender of the working machine 10 can grasp the inspection results of all the inspection items via the output inspection completion report. In contrast to this, the inspection completion report illustrated in Fig. 8 is an output of, for example, only the inspection items in which the inspection results at warehouse entry are "Not Allowed." In this case, the lender of the working machine 10 can grasp only the inspection items where repair is necessary via the output inspection completion report.

Meanwhile, the inspection completion report illustrated in Fig. 9 is an output of only information required when an additional claim to the customer is generated, for example, replacement of a component. For example, although a counter weight was not damaged at warehouse exit, damage and dent were generated at warehouse entry, the customer views the inspection completion report describing them and can grasp the factor of the expense claim at a glance.

While the embodiments of the present invention have been described in detail above, the present invention is not limited to the above-described embodiments and is allowed to make various kinds of changes in design within the range not departing from the spirits of the present invention described in the claims.

### Reference Signs List

- 1: Warehouse entry/exit management system
- 10: Working machine
- 11, 21, 31: Communication section
- 12: Vehicle body controller
- 13: On-board sensor
- 20: Server device
- 22: Vehicle body information management section
- 23: Inspection report identification section
- 24: Storage section
- 30: Terminal
- 32: Display section
- 33: Photographing section
- 34: Output section
- 40: Network
- 351: Photograph display region (first display region)
- 352: Photograph instruction acceptance region
- 353: Comment acceptance region (second display region)

## Claims

1. A warehouse entry/exit management system that inspects and manages a working machine at warehouse entry/exit of the working machine, comprising:
a server device that manages information of the working machine; and
a terminal communicatively connected to the server device,
wherein the server device includes a storage section, the storage section stores inspection report information that records an inspection item and a maintenance item of the working machine, and the server device identifies the inspection report information based on a request from the terminal and transmits the identified inspection report information to the terminal,
wherein the terminal includes a display section and a photographing section, the display section displays the inspection report information identified by the server device and accepts an input of an inspection result, and the photographing section takes a photograph of an inspection portion, and
wherein when a previous inspection result regarding the working machine is present in the storage section, the server device identifies the previous inspection result together with the inspection item and the maintenance item as the inspection report information.

2. The warehouse entry/exit management system according to claim 1,
wherein the previous inspection result includes the photograph of the inspection portion.

3. The warehouse entry/exit management system according to claim 1 or 2,
wherein the display section of the terminal has a first display region and a second display region, the first display region displays the photograph of the inspection portion, and the second display region displays related information on the inspection result.

4. The warehouse entry/exit management system according to claim 1 or 2,
wherein the terminal outputs an inspection completion report that writes both of the previous inspection result and a current inspection result of the working machine.
